# EUROPÄISCHE PATENTSCHRIFT

(11) **EP 1 028 876 B1**
(45) Veröffentlichungstag und Bekanntmachung des Hinweises auf die Patenterteilung: **11.10.2006**
(21) Anmeldenummer: 98956877.9
(22) Anmeldetag: 27.10.1998
(51) Int. Cl.: B60T 8/00

(54) **VERFAHREN ZUR VERBESSERUNG DES REGELVERHALTENS EINES ASR-SYSTEMS**
METHOD FOR IMPROVING THE CONTROL CHARACTERISTICS OF A TRACTION CONTROL SYSTEM
PROCEDE POUR AMELIORER LES CARACTERISTIQUES DE REGULATION D'UN SYSTEME ANTIPATINAGE

(30) Priorität: 14.11.1997 DE 19750501
(43) Veröffentlichungstag der Anmeldung: 23.08.2000
(73) Patentinhaber: Continental Teves AG & Co. oHG, 60488 Frankfurt (DE)
(72) Erfinder: LAUER, Josef, D-66620 Nonnweiler (DE)
(86) Internationale Anmeldenummer: PCT/EP1998/006803
(87) Internationale Veröffentlichungsnummer: WO 1999/025593

(56) Entgegenhaltungen:
- EP-A- 0 293 561
- EP-A- 0 656 275
- DE-A- 19 512 179
- US-A- 5 357 435
- DORISSEN H T ET AL: "ANTRIEBSSCHLUPFREGELUNG (ASR) - EIN BEITRAG ZUR AKTIVEN FAHRSICHERHEIT" ATZ AUTOMOBILTECHNISCHE ZEITSCHRIFT, Bd. 95, Nr. 4, 1. April 1993, Seiten 194-196, 198, 200 - 201, XP000364097

## Beschreibung

Die Erfindung bezieht sich auf ein Verfahren zur Verbesserung des Regelverhaltens eines ASR-Systems für Kraftfahrzeuge beim Befahren einer Kurve, bei dem das Motormoment des Kraftfahrzeug-Antriebsmotors abgesenkt wird, sobald der Antriebsschlupf eines Rades eine vorgegebene Regelschwelle überschreitet, bei dem in einem Antriebsschlupfregelungsmodus eine Motormomentenvorgabe in dem Regelungssystem errechnet und/oder in einem Regelkreis gebildet wird und bei dem eine Kurvenfahrterkennung durchgeführt wird. Es handelt sich also um ein Verfahren für ein ASR-System mit Motoreingriff.

Antriebsschlupfregelungssysteme, die ausschließlich auf Bremseneingriff, ausschließlich auf Motoreingriff oder sowohl auf Bremsen- als auch auf Motoreingriff in Abhängigkeit von der jeweiligen Fahr- und Regelungssituation ausgelegt sind, sind aus der Literatur in unterschiedlichen Ausführungsarten bekannt und auch im praktischen Einsatz zu finden. Solche Regelungssysteme, die in den meisten Fällen als Ergänzung oder Erweiterung eines der bekannten Antiblockiersysteme (ABS) ausgebildet sind, gewinnen ständig an Bedeutung.

Die bekannten Antriebsschlupfregelungssysteme dienen in erster Linie zur Verbesserung der Traktion beim Anfahren und Beschleunigung während einer Geradeausfahrt. Durch geregelten Bremseneingriff im Anfahrstadium in Verbindung mit einer anschließenden oder sofortigen Verringerung des Motormomentes wird eine Sperrdifferentialwirkung und eine in Anbetracht der Straßenverhältnisse gute oder optimale Traktion erzielt.

In allen Regelungsphasen und bei allen Regelungsauslegungen muß sowohl auf eine hohe Seitenstabilität als auch auf eine hohe Traktion geachtet werden. Wenn die Auswirkungen der einzelnen Regelungsschritte sich widersprechen, werden Kompromisse notwendig. Es ist bekannt, daß bei Regelungsvorgängen in einer Kurve der Erhalt der Fahrstabilität und die Lenkbarkeit des Fahrzeugs Schwierigkeiten bereiten kann.

In der EP 0 656 275 A2 ist ein Antriebsschlupf-Regelungssystem offenbart, bei dem eine Kurvenfahrt mit Hilfe eines Lenkradwinkelsensors erkannt wird und bei dem das Antriebsmoment im Falle eines Regelungseingriffs des Antriebsschlupf-Regelungssystem bei einer erkannten Kurvenfahrt stärker reduziert wird als bei einer erkannten Geradeausfahrt des Fahrzeugs.

In der gattungsgemäßen US-A-5 357 435 ist ein Verfahren zur Verbesserung eines Regelungverhaltens eines Antriebsschlupf-Regelungssystems offenbart, bei dem für Kraftfahrzeuge bei einer Kurvenfahrt das Antriebsmoment abgesenkt wird, wenn der Antriebsschlupf eines Rades eine vorgegebene Regelschwelle überschreitet und bei dem die Absenkung wieder aufgehoben wird, wenn der Kurvenradius der Kurve sich wieder vergrößert, d. h. beim Verlassen der Kurve.

Der Erfindung liegt daher die Aufgabe zugrunde, die genannten Schwierigkeiten zu beheben und ein mit einfachen Maßnahmen zu realisierendes Verfahren zu entwickeln, das zu einer spürbaren Erhöhung der Stabilität während einer Kurvenfahrt bei gleichzeitigem Erhalt oder Erhöhung der Traktion des geregelten Fahrzeugs führt.

Es hat sich gezeigt, daß diese Aufgabe durch das im Anspruch 1 beschriebene Verfahren gelöst wird, dessen Besonderheit darin besteht, daß beim Befahren einer Kurve die Momentenvorgabe für die Dauer der Kurvenfahrterkennung, und im wesentlichen nur für diese Zeitspanne, um einen von dem Kurvenradius direkt oder indirekt abhängigen Wert abgesenkt wird und daß die Motormomentenvorgabe nach Beendigung der Kurvenfahrterkennung wieder den vom ASR-Regler eingestellten Wert annimmt.

Dadurch wird einerseits ein spürbarer Stabilitätszuwachs beim Einlenken in eine Kurve und außerdem ein deutlicher Traktionsgewinn beim Verlassen der Kurve erreicht und auf diese Weise wird eine optimale Anpassung an den Kurvenverlauf erzielt.

Nach einem weiteren vorteilhaften Ausführungsbeispiel der Erfindung wird zur Bestimmung des Kurvenradius die Differenzgeschwindigkeit zwischen den beiden Rädern einer Achse, vorzugsweise zwischen den Rädern der nicht angetriebenen Achse, ausgewertet bzw. zur Anpassung der Regelung an die jeweilige Kurvenkrümmung eingesetzt. Es hat sich dabei als besonders zweckmäßig erwiesen, die Motormomentenvorgabe um den Betrag der Differenz der Radgeschwindigkeiten oder um einen bestimmten Anteil oder ein Vielfaches dieser Differenz abzusenken.

Weitere Einzelheiten der Erfindung gehen aus der folgenden Darstellung anhand der beigefügten Abbildung hervor, die in Form eines Diagramms die vorgenannten Zusammenhänge und die Auswirkungen des erfindungsgemäßen Verfahrens anhand eines Ausführungsbeispiels bzw. in einer beispielhaften Situation wiedergibt.

Es zeigen:
- Fig. 1: den Verlauf des Antriebsschlupfes eines angetriebenen Fahrzeugrades während einer Kurvenfahrt und eines Antriebsschlupfregelungsvorganges und
- Fig. 2: im gleichen Zeitmaßstab wie Fig. 1 den Momentenverlauf in dieser Situation.

Bei dem hier als Beispiel betrachteten Vorgang, der sowohl an einem Fahrzeug mit Vorderradantrieb als auch an einem Fahr zeug mit Hinterradantrieb beobachtet werden kann, wobei natürlich die Auswirkungen auf ein angetriebenes Rad dargestellt sind, setzt zum zeitpunkt t₀ ein Antriebsschlupfregelung ein.

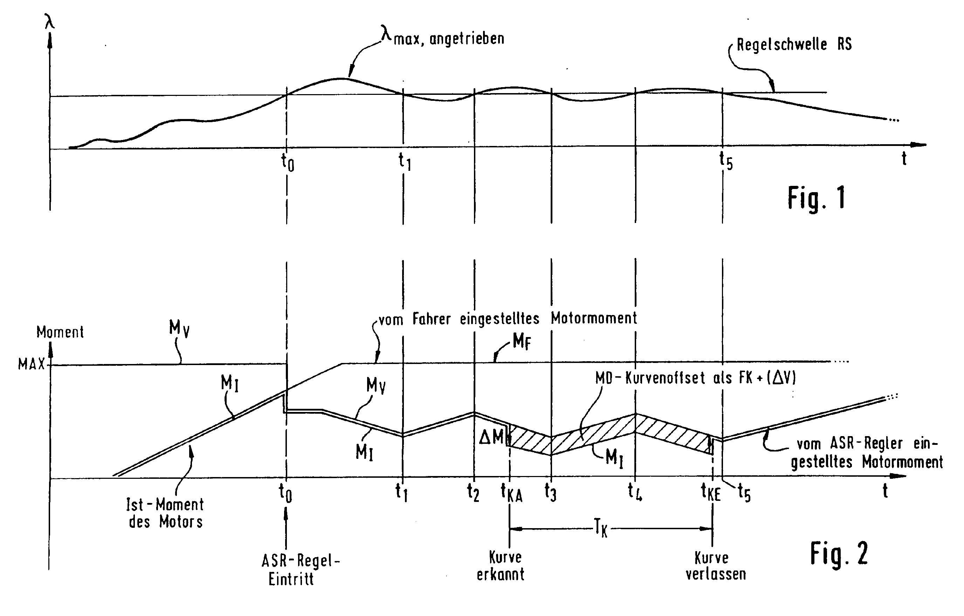

Die Figuren 1 und 2 beziehen sich grundsätzlich auf ein Antriebsschlupfregelungssystem (ASR-System) bekannter oder gebräuchlicher Art, bei dem zu Regelungszwecken das Antriebsmoment des Fahrzeugmotors ausschließlich oder zusätzlich zum Bremseneingriff abgesenkt und geregelt werden kann. In dem oberen Diagramm, Fig. 1, ist der Antriebsschlupf λ über der Zeit t wiedergegeben. Zum Zeitpunkt t₀ überschreitet der Schlupf λ eine Regelschwelle RS, wodurch das Einsetzen der Antriebsschlupfregelung ausgelöst bzw. eine Umschaltung in einen Antriebsschlupfregel-Modus (ASR-Modus) ausgelöst wird. Es kann sich um eine feste oder um eine variable, von der Fahrzeuggeschwindigkei oder Fahrzeug-Referenzgeschwindigkeit abhängige Regelschwelle handeln. Als Folge der Regelung ░pendelt░ der Antriebsschlupf im weiteren Verlauf des Regelungsvorgangs um die Regelschwelle RS. Die Zeitpunkte des Unterschreitens und Überschreitens der Regelschwelle RS sind mit t₁, t₂, t₃, t₄, t₅ in Fig. 1 und Fig. 2 bezeichnet.

In dem Diagramm nach Fig. 2 sind schematisch vereinfacht das von dem Fahrer durch die Gaspedalbetätigung eingestellte Motormoment M_{F}, die Motormomentenvorgabe M_{V}, nämlich das dem Regler vorgegebene Moment, und schließlich das Ist-Moment des Antriebsmotors M_{I} dargestellt; M_{I} ist durch den unteren Kurvenzug in Fig. 2 wiedergegeben, der nach dem ASR-Regeleintritt zum Zeitpunkt t₀, wenn die erfindungsgemäße, später erläuterte Absenkung nach der Kurvenerkennung außer acht bliebe, von der Motormomentenvorgabe M_{V} bestimmt würde; in den Bereichen t₀ bis t_{KA} und nach t_{KE} stimmen M_{V} und M_{I} überein.

Bei einem Antriebsschlupfregelungsvorgang, auf den sich die Diagramme in den Fig. 1 und 2 beziehen, wird von dem Regler in Abhängigkeit von dem Antriebsschlupf λ des den höchsten Schlupfwert (λ_{max.}) zeigenden Antriebsrades ein Motormoment Mᵥ vorgegeben, solange das vom Fahrer durch die Betätigung des Gaspedals eingestellte Motormoment M_{F} über der Momentenvorgabe M_{V} liegt. Dies veranschaulicht Fig. 2.

Zum Zeitpunkt t_{KA} wird nun von dem Regler erkannt, daß das Fahrzeug eine Kurve befährt. Als Folge dieser Kurvenerkennung wird erfindungsgemäß die Momentenvorgabe M_{V} in der Zeitspanne T_{K}, d.h. zwischen t_{KA} und t_{KE}, um einen vorgegebenen Betrag ΔM abgesenkt. Sobald die Kurvenerkennung beendet ist, nämlich zum Zeitpunkt t_{KE}, nimmt die Momentenvorgabe M_{V} wieder den vom ASR-Regler eingestellten Wert an.

Die Absenkung des Motormomentes bzw. der Momentenvorgabe Mᵥ wird im vorliegenden Beispiel der Erfindung durch ein MD-Kurvenoffsetsignal herbeigeführt. ΔM kann als fester Wert vorgegeben werden. Als besonders vorteilhaft hat es sich erwiesen, diese während der Kurvenfahrt wirkende Absenkung der Momentenvorgabe bzw. die Höhe dieser Absenkung in Abhängigkeit von einem Differenzsignal Δv zu variieren, das den Geschwindigkeitsunterschied (Δv) zwischen den beiden Rädern der nicht angetriebenen Achse des Fahrzeugs wiedergibt.

Die erfindungsgemäße Absenkung der Motormomentenvorgabe M_{V} um den Wert ΔM = f(Δv) führt zu einem spürbaren Zuwachs der Fahrstabilität beim Befahren einer Kurve. Das Lenkverhalten wird verbessert. Bei einem Fahrzeug mit vorderradantrieb wird die üblicherweise auftretende Untersteuertendenz zugunsten eines neutralen Lenkungsverhaltens behoben. Beim Verlassen der Kurve wird durch das Wiedererhöhen der Motormomentenvorgabe Mᵥ ein deutlicher Traktionsgewinn erzielt. Erfindungsgemäß wird also durch eine insgesamt sehr einfach zu realisierende Maßnahme, welche keinen zusätzlichen Aufwand erfördert, wenn die ohnehin für das Regelsystem benötigte Kurvenerkennung verwendet wird; es ist lediglich eine Erweiterung der Regelungs-Software notwendig.

## Patentansprüche

1. Verfahren zur Verbesserung des Regelverhaltens eines Antriebsschlupf-Regelungssystems (ASR) für Kraftfahrzeuge beim Befahren einer,Kurve, bei dem das Motormoment des Kraftfahrzeug-Antriebsmotors abgesenkt wird, sobald der Antriebsschlupf eines Rades eine vorgegebene Regelschwelle überschreitet, und bei dem in einem Antriebsschlupf-Regelmodus eine Motormomentenvorgabe in dem Regelungssystem errechnet und/oder in einem Regelkreis gebildet wird und bei dem eine Kurvenfahrterkennung durchgeführt wird,
**dadurch gekennzeichnet, daß** beim Befahren einer Kurve die Motormomentenvorgabe (M_{V}) für die Dauer (T_{K}) der Kurvenfahrterkennung oder näherungsweise für die Dauer (T_{K}) der Kurvenfahrterkennung um einen von dem Kurvenradius direkt oder indirekt abhängigen Wert abgesenkt wird, und daß die Motormomentenvorgabe Mᵥ nach Beendigung der Kurvenfahrterkennung wieder den vom ASR-Regler eingestellten Wert annimmt.

2. Verfahren nach Anspruch 1,
**dadurch gekennzeichnet, daß** zur Bestimmung des Kurvenfahrtradius die Differenzgeschwindigkeit zwischen den beiden Rädern einer Achse ausgewertet wird.

3. Verfahren nach Anspruch 1 oder 2,
**dadurch gekennzeichnet, daß** zur Bestimmung des Kurvenfahrtradius die Differenzgeschwindigkeit zwischen den beiden Rädern der nicht angetriebenen Achse ausgewertet wird.

4. Verfahren nach einem oder mehreren der Ansprüche 1 bis 3,
**dadurch gekennzeichnet, daß** die Motormomentenvorgabe (Mᵥ) um den Betrag der der Geschwindigkeitsdifferenz der nicht angetriebenen Räder oder um ein Vielfaches dieses Betrags abgesenkt wird.

## Claims

1. Method of improving the control behaviour of a traction slip control system (TCS) for motor vehicles in a cornering manoeuvre, where the engine torque of the motor vehicle driving engine is reduced as soon as the traction slip of a wheel exceeds a predetermined control threshold, and where in a traction slip control mode a preset engine torque is calculated in the control system and/or produced in a control circuit, and where a cornering detection operation is performed,
**characterized in that** in a cornering manoeuvre the preset engine torque (Mᵥ) is decreased by a value that is directly or indirectly dependent on the radius of curve for the duration (T_{K}) of the cornering detection operation or in approximation for the duration (T_{K}) of the cornering detection operation, and **in that** the preset engine torque (Mᵥ) reassumes the value adjusted by the TCS controller after termination of the cornering detection operation.

2. Method as claimed in claim 1,
**characterized in that** the differential speed between the two wheels of an axle is evaluated to determine the radius of curve.

3. Method as claimed in claim 1 or 2,
**characterized in that** the differential speed between the two wheels of the non-driven axle is evaluated to determine the radius of curve.

4. Method as claimed in any one or more of claims 1 to 3,
**characterized in that** the preset engine torque (M_{V}) is reduced by the magnitude of the difference in speed of the non-driven wheels or by a multiple of this magnitude.

## Revendications

1. Procédé pour perfectionner la tenue de réglage d'un système à réglage de traction-glissement (TGC) pour des véhicules roulant au virage, dans lequel le couple moteur du moteur de commande d'automobile est abaissé aussitôt que la traction-glissement d'une roue dépasse un seuil de réglage prédéterminé et dans lequel, dans un mode à réglage de traction-glissement, un couple moteur prédéterminé est calculé dans le système à réglage et/ou formé dans un circuit à réglage et dans lequel une détection de virage est effectuée, **caractérisé en ce qu'**en roulant au virage le couple moteur prédéterminé (Mᵥ) pour la durée (Tₖ) de la détection de virage ou environ pour la durée (Tₖ) de la détection de virage est abaissé par une valeur dépendante directement ou indirectement du rayon de virage, et que le couple moteur prédéterminé (Mᵥ) après la détection de virage prends la valeur ajustée par la commande TGC.

2. Procédé conforme à la revendication 1, **caractérisé en ce que** la différence de vitesse entre les deux roues d'un essieu est évaluée pour déterminer le rayon de virage.

3. Procédé conforme aux revendications 1 ou 2, **caractérisé en ce que** la différence de vitesse entre les deux roues de l'essieu non commandé est évaluée pour déterminer le rayon de virage.

4. Procédé conforme à l'une ou plusieurs de revendications 1 à 3, **caractérisé en ce que** le couple moteur prédéterminé (Mᵥ) est abaissé par la valeur de la différence de vitesse des roues non commandées ou par un multiple de cette valeur.
